# EUROPEAN PATENT SPECIFICATION

(11) **EP 1 819 031 B1**
(45) Date of publication and mention of the grant of the patent: **17.11.2010**
(21) Application number: 07100234.9
(22) Date of filing: 08.01.2007
(51) Int. Cl.: H02K 21/46, H02K 3/16, H02P 1/50

(54) **Self magnetizing motor**
Selbstmagnetisierungsmotor
Moteur auto-magnétisant

(30) Priority: 10.02.2006 KR 20060013278
(43) Date of publication of application: 15.08.2007
(73) Proprietor: LG Electronics Inc., Seoul 150-721 (KR)
(72) Inventor: Lee, Sung-Ho, Gyeonggi-Do (KR); Choi, Jae-Hak, Seoul (KR); Kim, Jae-Min, Seoul (KR)
(74) Representative: Vossius & Partner

(56) References cited:
- EP-A1- 0 189 652
- WO-A-99/43077
- GB-A- 2 026 253
- US-A- 3 891 879

## Description

The present invention relates to a self magnetizing motor, and more particularly, to a self magnetizing motor which improves a magnetizing level of an exciter magnetizing unit.

Documents GB 2 026 253 and EP 0 189 652 disclose such self magnetising motors.

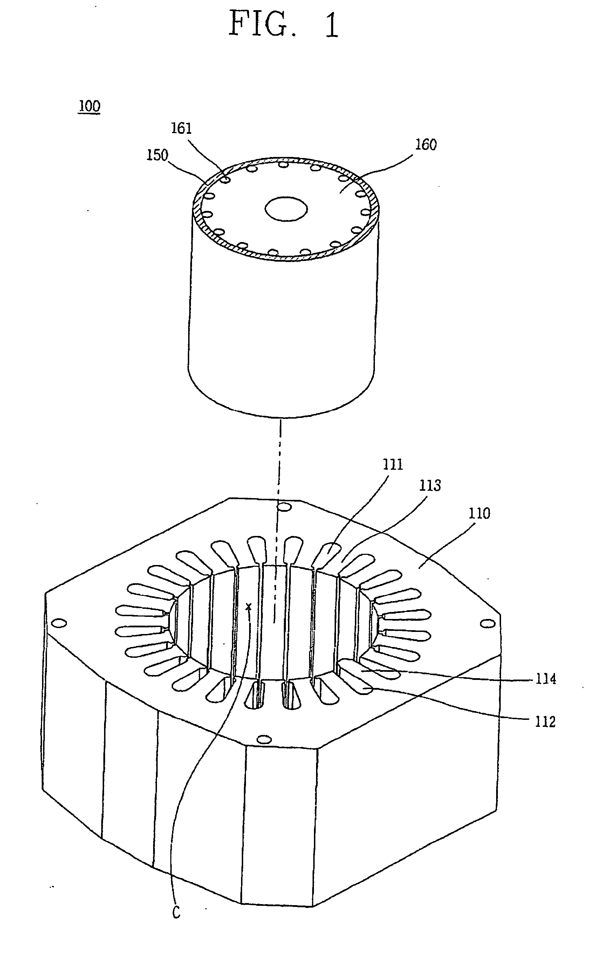

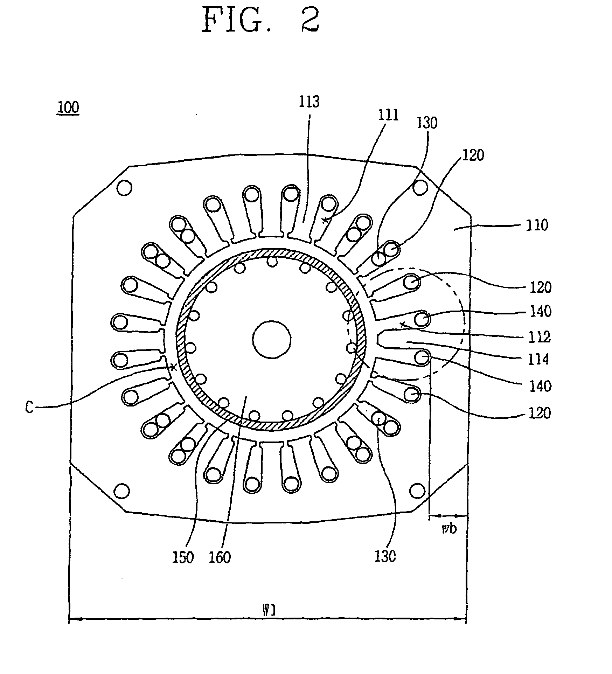

Figure 1 is an exploded perspective view of illustrating a related art self magnetizing motor. Figure 2 is a cross section view of illustrating the self magnetizing motor of Figure 1.

Referring to Figures 1 and 2, the related art self magnetizing motor 100 includes a stator 110 which is provided with a plurality of stator slots 111 and exciter slots 112 along an inner circumferential surface at fixed intervals, a teeth 113 provided between each of the stator slots 111, and an exciter pole 114 provided between each of the exciter slots 112; a main-coil 120 which is wound on each stator slot 111; a sub-coil 130 which is wound on each stator slot 111, wherein a current phase of the sub-coil 130 is prior to a current phase of the main-coil 120 by 90°; an exciter coil 140 which is wound on the exciter slot 112; and a rotor 160 which is rotatably inserted into the center (C) of the stator 110, and is provided with an exciter magnetizable portion 150 on an outer circumferential surface to be magnetized by the exciter coil 140.

As the exciter magnetizable portion 150 is provided on the outer circumferential surface of the rotor 160, and the exciter pole 114 is provided in the stator 110 to selectively magnetize the exciter magnetizable portion 150, the self magnetizing motor is operated by an induced electromotive force generated by the main-coil 120, the sub-coil 130 and a conductor bar 161 of the rotor 160 from an initial operation right before a synchronous speed. On the synchronous speed, the self magnetizing motor is operated by an induced electromotive force generated by the exciter pole 114 and the exciter magnetizable portion 150.

In the meantime, a magnetizing level of the exciter magnetizable portion 150 has large effects on an operation efficiency of the self magnetizing motor 100 on the synchronous speed. To improve the magnetizing level of the exciter magnetizing portion 150, the following methods may be be used.

Firstly, the magnetizing intensity is improved by increasing the turns of the exciter coil 140. Secondly, the magnetizing current is increased by increasing the diameter of the exciter coil 140. Thirdly, the magnetizing intensity is improved by increasing the turns of the exciter coil 140, and the magnetizing current is increased by increasing the diameter of the exciter coil 140. Fourthly, the exciter magnetizable portion 150 is formed of the material which has the good magnetizing property. However, the firstly proposed method has a problem in that a current is decreased in a predetermined-voltage state. Thus, the magnetizing intensity may be constant without being increased, so that it is not effective due to the restriction of space and the increased cost. Also, the secondly proposed method has the restriction of space. The thirdly proposed method may have the saturated magnetic induction. The fourthly proposed method has the increased cost.

Therefore, an object of the present invention is to provide a self magnetizing motor which improves a magnetizing level of an exciter magnetizing unit by changing a position of an exciter pole.

To achieve these and other advantages the present invention concerns a self magnetizing motor according to claim 1.

Preferred embodiments are defined in the dependent claims.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:
Figure 1 is an exploded perspective view illustrating a related art self magnetizing motor;
Figure 2 is a cross sectional view illustrating the self magnetizing motor shown in Figure 1;
Figure 3 is a cross sectional view illustrating a self magnetizing motor according to one preferred embodiment of the present invention; and
Figure 4 is an expanded view illustrating 'A' of Figure 3.

Reference will now be made in detail to the preferred embodiments of the present invention, examples of which are illustrated in the accompanying drawings.

Hereinafter, a self magnetizing motor according to the present invention will be explained with reference to the accompanying drawings.

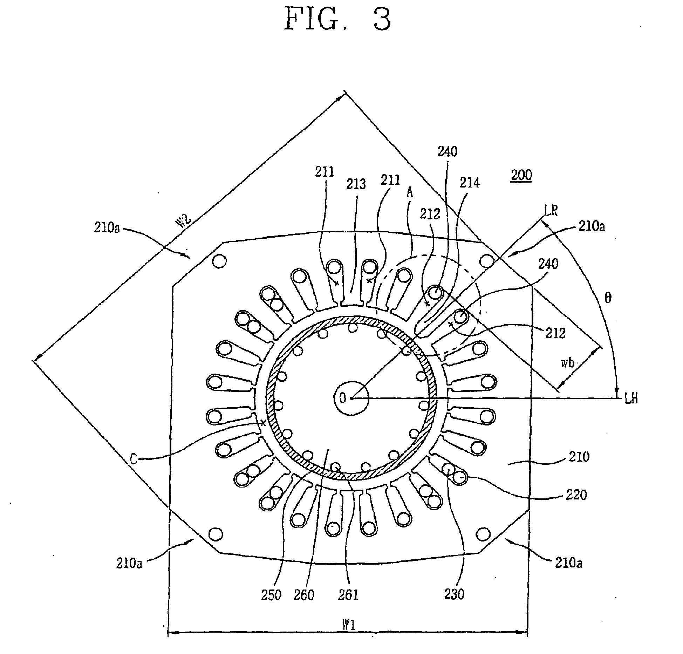

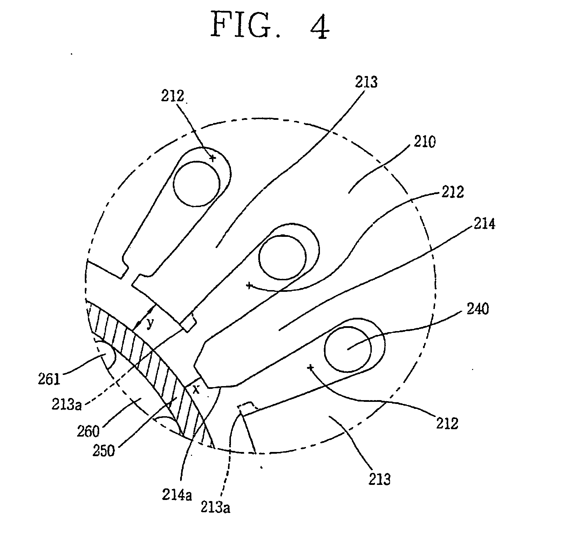

Figure 3 is a cross sectional view illustrating a self magnetizing motor according to one preferred embodiment of the present invention. Figure 4 is an expanded view of illustrating 'A' of Figure 3.

Referring to Figures 3 and 4, the self magnetizing motor 200 according to one preferred embodiment of the present invention includes a stator 210 which has a plurality of sheets provided with a plurality of stator slots 211 and exciter slots 212 along an inner circumferential surface of the stator at fixed intervals, a teeth 213 provided between each of the stator slots 211, and an exciter pole 214 provided between each of the exciter slots 212, wherein an end of the exciter pole 214 is positioned closer to the center (C) in comparison with an end of the teeth 213; a main-coil 220 which is wound on each stator slot 211; a sub-coil 230 which is wound on each stator slot 211, wherein a current phase of the sub-coil 230 is prior to a current phase of the main-coil 220 by 90°; an exciter coil 240 which is wound on the exciter slot 212; and a rotor 260 which is rotatably inserted into the center (C) of the stator 210, and is provided with an exciter magnetizable portion 250 on an outer circumferential surface to be magnetized by the exciter coil 240.

The exciter pole 214 is positioned at an corner 210a of the stator 210 so that a rear stator portion 210 (hereinafter, referred to as a back yoke) of the exciter pole 214 is increased in size.

At this time, the corner 210a of the stator 210 is positioned on a rotation line (LR) which is obtained as rotating the central point (O) of the stator 210 by 45°, 135°, 225°, and 315° counter clockwise with respect to a horizontal line (LH). Accordingly, the exciter pole 214 may be positioned on any one rotation line (LR) which is obtained by rotating the central point (O) of the center (C) at any one angle (θ) of 45°, 135°, 225°, and 315° counter clockwise with respect to the horizontal line (LH) passing through the central point (O) of the center (C). In this preferred embodiment, the exciter pole 214 is positioned on the rotation line (LR) which is obtained as counter clockwise rotating the central point (O) of the stator 210 by 45° with respect to the horizontal line (LH).

As described above, since the exciter pole 214 is positioned at the corner 210a of the stator 210, it is unnecessary to increase a width (Wb) of the back yoke of the exciter pole 214 by increasing a width (W1) of the stator 210. In case of the related art, it necessarily requires increasing the width (W1) of the stator 210 so as to increase the size of the back yoke. In the present invention, the position of the exciter pole 214 is moved to the corner 210a of the stator 210 which has the large width (W2) of the diagonal direction. Thus, the width (Wb) of the back yoke is increased without the process of increasing the width (W1) of the stator 210. Accordingly, the magnetizing level of the self magnetizable portion 250 is improved without the increase of cost and the size restriction for the self magnetizing motor.

To improve the magnetizing level of the exciter magnetizable portion 250, a gap (x) between the end of the exciter pole 214 and the outer circumferential surface of the exciter magnetizable portion 250 is smaller than a gap (y) between the end of the teeth 213 and the outer circumferential surface of the excite magnetizable portion 250. At this time, the magnetic permeability of air is 1/3000 times smaller than the magnetic permeability of exciter pole 214, whereby it has the large magnetic resistance. Generally, the intensity of magnetic field is in proportion to the current I is in proportion to the turns; and is in inverse proportion to the magnetic resistance R. In this respect, as the gap (x) between the end of the exciter pole 214 and the outer circumferential surface of the exciter magnetizable portion 250 becomes smaller, the intensity of magnetic field becomes increased by (y/x), thereby improving the magnetizing level of the exciter magnetizable portion 250.

Among the plurality of teeth 213, the teeth 213 which are close to the exciter slot 212 have the structure of removing some portions (pole shoe) 21 3a of the end thereof so as to prevent the magnetic flux generated by the exciter coil 140 from being leaked.

Also, there is a tapered portion 214a in the end of the exciter pole 214 to thereby prevent the magnetic flux generated by the exciter coil 240 from being leaked.

The exciter magnetizable portion 250 may be formed of a magnetizable material which can be selectively magnetized by the current flowing in the exciter coil 240 wound on the exciter pole 214, that is, a material which is easily magnetized or demagnetized.

The exciter magnetizable portion 250 is formed of an additional body being separated from the rotor 260, and is fixed to the outer circumferential surface of the rotor 260, wherein the exciter magnetizable portion 250 is formed in a cylindrical structure. Also, the exciter magnetizable portion 250 of a layered-type may be coated on the outer circumferential surface of the rotor 260.

An operation of the above self magnetizing motor according to the present invention will be explained as follows.

Referring to Figures 3 and 4, as the external AC current is applied to the main-coil 220 and the sub-coil 230 wound on the stator slot 211 on the initial operation of the self magnetizing motor, wherein current phase of the sub-coil 230 is prior to the current phase of the main-coil 220 by 90°, the rotating magnetic field is formed in the stator 210.

As the induced current flows in a conductor bar 261 of the rotor 260 by the rotating magnetic field, the rotor 260 is rotated by the induced current.

When the rotor 260 is slipped and rotated after the operation, the current of the sub-coil 230 is cut-off by a current breaker (not shown), and the current flows only in the main-coil 220.

As the rotor 260 rotates, the exciter magnetizable portion 260 positioned in the outer circumferential surface of the rotor 260 is magnetized at a low density by the rotating magnetic field of the stator 210, that is, the hysteresis effects. Eventually, the rotor 260 is rotated by the hysteresis torque of the hysteresis effects and the induced torque of above-mentioned induced current.

In the meantime, if the current is applied to the exciter coil 240 in a state that the rotation speed of the rotor 260 is about 2,520 - 2,880rpm corresponding to 70 - 80% of the synchronous speed of the rotating magnetic field in the stator 210, the magnetic flux generated by the exciter coil 240 is transmitted to the exciter magnetizable portion 250, whereby the exciter magnetizable portion 250 is magnetized at a high density. At this time, since the exciter pole 240 is positioned at the corner 210a of the stator 210, it is possible to improve the magnetizing level of the exciter magnetizable portion 250. Also, some portions (pole shoe) 213a of the end of the teeth 213 being positioned close to the exciter slot 212 are removed, and the tapered portion 214a is formed in the end of the exciter pole 214. Thus, the magnetic flux generated by the exciter coil 240 is not leaked, thereby improving the magnetizing level of the exciter magnetizable portion 250.

As the exciter magnetizable portion 250 is magnetized at the high density, the rotor 260 is rotated at the synchronous speed of the rotating magnetic field without slipping. At this time, the induced current is not flowing in the conductor bar 261. That is, the rotor 260 is operated by the magnetomotive force generated by the exciter pole 214 and the exciter magnetizable portion 250.

As mentioned above, the self magnetizing motor according to the present invention has the following advantages.

First, the exciter pole is positioned at the corner of the stator, whereby it is possible to improve the magnetizing level of the exciter magnetizable portion without increasing the size of the self magnetizing motor, thereby improving the magnetizing efficiency and decreasing the fabrication cost.

Secondly, the gap between the end of the exciter pole and the outer circumferential surface of the exciter magnetizable portion is smaller than the gap (y) between the end of the teeth and the outer circumferential surface of the excite magnetizable portion. Thus, the efficiency of the self magnetizing motor is improved with the increased magnetizing level of the exciter magnetizable portion.

Thirdly, some portions of the end of the teeth being positioned close to the exciter slot are removed, and the tapered portion is formed in the end of the exciter pole, whereby the magnetizing level of the exciter magnetizable portion is improved by preventing the magnetic flux generated by the exciter coil from leaking, thereby improving the efficiency of self magnetizing motor.

As the present invention may be embodied in several forms without departing from the spirit or essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A self magnetizing motor (200) comprising:
a stator (210) which is comprised of a plurality of sheets including a plurality of stator slots (211) and exciter slots (212) formed at fixed intervals along an inner circumferential surface of the stator (210), teeth (213) provided between each of the stator slots (211), and an exciter pole (214) formed between the exciter slots (212),
an exciter coil (240) which is wound on each exciter stot (212), and
a rotor (260) which is rotatably inserted into the center (C) of the stator (260), and is provided with an exciter magnetizable portion (250) on an outer circumferential surface to be magnetized by the exciter coil (240);
**characterised in that** the exciter pole (214) is positioned at a corner (210a) of the stator (210) so that the rear stator portion of the exciter pole (214) is increased in size.

2. The self magnetizing motor of claim 1, wherein the exciter pole (214) is positioned on a rotation line (LR) which is located in any one angle of 45°, 135°, 225°, and 315° counter clockwise with respect to a horizontal line (LH) passing through the central point (O) of the center (C) of the stator (210).

3. The self magnetizing motor of claim 1 or 2, wherein a gap (x) between the end of the exciter pole (214) and the outer circumferential surface of the exciter magnetizable portion (250) is smaller than a gap (y) between the end of the teeth (213) and the outer circumferential surface of the exciter magnetizable portion (250).

4. The self magnetizing motor of any of claims 1 to 3, wherein some portions (213a) of the end of the teeth (213) being positioned close to the exciter slot (212) are removed, and a tapered portion (214a) is formed in the end of the exciter pole (214).

## Patentansprüche

1. Selbstmagnetisierungsmotor (200) mit:
einem Stator (210), der aufweist: mehrere Bahnen mit mehreren Statorschlitzen (211) und Erregerschlitzen (212), die in festen Abständen entlang einer Innenumfangsfläche des Stators (210) gebildet sind, Zähne (213), die zwischen jedem der Statorschlitze (211) vorgesehen sind, und einen Erregerpol (214), der zwischen den Erregerschlitzen (212) gebildet ist;
einer Erregerspule (240), die auf jedem Erregerschlitz (212) gewickelt ist; und
einem Rotor (260), der in die Mitte (C) des Stators (210) drehbar eingesetzt ist und mit einem magnetisierbaren Erregerabschnitt (250) auf einer Außenumfangsfläche versehen ist, um durch die Erregerspule (240) magnetisiert zu werden,
**dadurch gekennzeichnet, daß** der Erregerpol (214) an einer Ecke (210a) des Stators (210) positioniert ist, so daß der hintere Statorabschnitt des Erregerpols (214) vergrößert ist.

2. Selbstmagnetisierungsmotor nach Anspruch 1, wobei der Erregerpol (214) auf einer Rotationslinie (LR) positioniert ist, die in jedem Winkel von 45°, 135°, 225° und 315° gegen den Uhrzeigersinn im Hinblick auf eine Horizontallinie (LH) liegt, die den Mittelpunkt (O) der Mitte (C) des Stators (210) durchläuft.

3. Selbstmagnetisierungsmotor nach Anspruch 1 oder 2, wobei ein Spalt (x) zwischen dem Ende des Erregerpols (214) und der Außenumfangsfläche des magnetisierbaren Erregerabschnitts (250) kleiner als ein Spalt (y) zwischen dem Ende der Zähne (213) und der Außenumfangsfläche des magnetisierbaren Erregerabschnitts (250) ist.

4. Selbstmagnetisierungsmotor nach einem der Ansprüche 1 bis 3, wobei einige Abschnitte (213a) des Endes der Zähne (213), die nahe dem Erregerschlitz (212) positioniert sind, entfernt sind und ein abgeschrägter Abschnitt (214a) im Ende des Erregerpols (214) gebildet ist.

## Revendications

1. Moteur automagnétisant (200) comprenant :
un stator (210) qui comprend une pluralité de feuilles incluant une pluralité d'encoches de stator (211) et d'encoches d'excitatrice (212) formées à des intervalles fixes le long d'une surface périphérique intérieure du stator (210),
des dents (213) placées entre chaque encoche de stator (211), et un pôle d'excitation (214) formé entre les encoches d'excitatrice (212),
une bobine d'excitation (240) qui est enroulée sur chaque encoche d'excitatrice (212), et
un rotor (260) qui est inséré de manière rotative dans le centre (C) du stator (210), et est pourvu d'une partie magnétisable d'excitation (250) sur une surface périphérique extérieure devant être magnétisée par la bobine d'excitation (240),
**caractérisé en ce que** le pôle d'excitation (214) est positionné dans un coin (210a) du stator (210) afin que la taille de la partie arrière de stator du pôle d'excitation (214) augmente.

2. Moteur automagnétisant selon la revendication 1, dans lequel le pôle d'excitation (214) est positionné sur une ligne de rotation (LR) qui est située à un angle quelconque de 45°, 135°, 225°, et 315° en sens inverse horaire par rapport à une ligne horizontale (LH) passant par le point central (O) du centre (C) du stator (210).

3. Moteur automagnétisant selon la revendication 1 ou 2, dans lequel un entrefer (x) entre l'extrémité du pôle d'excitation (214) et la surface périphérique extérieure de la partie magnétisable d'excitation (250) est inférieur à un entrefer (y) entre l'extrémité des dents (213) et la surface périphérique extérieure de la partie magnétisable d'excitation (250).

4. Moteur automagnétisant selon l'une quelconque des revendications 1 à 3, dans lequel certaines portions (213a) de l'extrémité des dents (213) positionnées près de l'encoche d'excitatrice (212) sont supprimées, et une portion conique (214a) est formée dans l'extrémité du pôle d'excitation (214).
